# EUROPEAN PATENT APPLICATION

(11) **EP 4 764 519 A1**
(43) Date of publication of application: **24.06.2026**
(21) Application number: 24307275.8
(22) Date of filing: 23.12.2024
(51) Int. Cl.: G01R 31/317, G01R 31/3185, G01R 31/319, G06F 11/07, G06F 21/50

(54) **NON-DESTRUCTIVE FAULT DETECTING METHOD AND SYSTEM USING DEBUG ACCESS PORTS**

(71) Applicant: Secure-IC SAS, 35510 Cesson-Sévigné (FR)
(72) Inventor: SHRIVASTWA, Ritu-Ranjan, 13008 MARSEILLE (FR); GUILLEY, Sylvain, 75013 PARIS (FR)
(74) Representative: Atout PI Laplace

(57) **Abstract**

It is proposed an electronic circuit (10) comprising a target circuit (100), a CPU (200), a memory system (400), a test application system (300) and a measurement system (500). The target circuit comprises a plurality of debug access ports and N scan paths of components, each path passing through at least a part of said ports. The test application system is configured to generate a clock signal (CLK) to implement an overclocking test sequence. The CPU is configured to apply at least one input vector (Vᵢₙ) to said paths, under a nominal and said overclocking test sequences delivering a nominal and a test output vectors. The measurement system is configured to perform a comparison operation between the test output vector (Vₒᵤₜ) and the nominal output vector (Vₒᵤₜ₋ᵢ) stored in the memory system, and to deliver at least one comparative vector (V_{comp}) being a fault detecting signature of the electronic circuit.

## Description

### TECHNICAL FIELD

This invention generally relates to electronic circuit and, more particularly, to a non-destructive method and system for detecting fault in an electronic circuit using debug access ports of the electronic circuit.

Faults that may occur in an electronic circuit can be related to a hardware defect in the circuitry of the electronic circuit and/or to a firmware defect executed by the CPU of the electronic circuit. Some hardware defects may be of a malicious nature and originate from an attacker, such as defects related to hardware Trojans inserted in electronic circuits. The detection of such faults is paramount to preserve the integrity and the security of the electronics circuits.

Various methods and systems have been proposed to detect such faults (in particular related to hardware Trojans detections).

An approach based on electro-magnetic analysis has been proposed to detect such faults, as described for example in the article "Machine Learning Based Hardware Trojan Detection Using Electromagnetic Emanation" from Junko Takahashi et al. 2020, ICICS. Such approach enables the detection of hardware Trojans even when they are neither activated nor triggered. However, electro-magnetic analysis is experimentally challenging as it lacks practicality. Indeed, an electro-magnetic analysis is a slow and expensive process requiring numerous measurements, as well as specialized and bespoke equipment. Electro-magnetic analysis can be also prone to noise (like environmental measurement) and has limited accuracy as it relies on indirect measurement. Further, electro-magnetic analysis can suffer from a problem of reproducibility as the electro-magnetic antennas, the electronic circuit under test and the global test bench must be placed exactly at the same location between detection in training and in matching phases. Likewise, the environmental conditions (temperature, voltage, humidity, etc.) must perfectly be matched.

Another known approach uses delay analysis, although very few implementations of such approach have been proposed. However, such delay analysis approach usually requires expensive test equipment and setup.

Another known approach, called the RAZOR approach, has been proposed, as described for example in the article "A Self-Tuning DVS Processor Using Delay-Error Detection and Correction" from Shidhartha Das et al. 2026, IEEE Journal of Solid-state circuits. The RAZOR approach has been developed for fault detection or voltage calibration but suffers from similar drawbacks as the previous approaches.

There is accordingly a need for an improved non-destructive method, system, computer program capable of efficiently detecting fault in an electronic circuit.

### SUMMARY

In order to address these and other problems, there is provided an electronic circuit comprising a target circuit, a CPU and a memory system. The target circuit comprises a plurality of debug access ports and includes a number of N scan paths, each path passing through at least a part of said debug access ports. The CPU is configured to apply at least one input vector of N bits to the target circuit under a nominal test sequence, each bit of the at least one input vector corresponding to an input value of one of the paths. In response to the application of the at least one input vector, the memory system is configured to store a nominal output vector of N bits from said target circuit, each bit of the nominal output vector corresponding to an output value of one of the paths.

The electronic circuit further comprises a test application system and a measurement system. The test application system is configured to generate a clock signal to implement an overclocking test sequence. The CPU is configured to apply the at least one input vector to the target circuit under the overclocking test sequence, the measurement system being configured to perform a comparison operation between said stored nominal output vector and a test output vector obtained in response to the overclocking test sequence, and to deliver at least one comparative vector being a signature of the electronic circuit for detecting fault related to at least one hardware defect of the target circuit and/or related to at least one firmware defect executed by the CPU through the target circuit.

The debug access ports may be JTAG ports, and the test application system may comprise a JTAG controller.

In some embodiments, the memory system may be configured to store the at least one comparative vector from the measurement system.

The at least one comparative vector may comprise N bits, and the measurement system may be configured to count said bits of the at least one comparative vector to deliver at least one resulting value being a signature of the electronic circuit for detecting fault related to at least one hardware defect of the target circuit and/or related to at least one firmware defect executed by the CPU through the target circuit.

According to some embodiments, the memory system may be configured to store the at least one resulting value from the measurement system.

The measurement system may be configured to count values of the at least one resulting value to deliver a total number of differences forming a signature of the electronic circuit for detecting fault related to at least one hardware defect of the target circuit and/or related to at least one firmware defect executed by the CPU through the target circuit.

According to some embodiments, the test application system may comprise a glitch generator using a phase locked loop component to create a glitch delay in an initial clock signal, the clock signal generated being a glitched clock signal.

The at least one input vector may be a pair of test vectors, and the glitched clock signal may comprise a first clock period driving the injection of the first test vector of the pair, and a second glitched clock period driving the injection of the second test vector of the pair, and also the capture of the test output vector.

In some embodiments, the at least one input vector may be a single test vector, and the test application system may comprise a delayed clock unit, the clock signal generated being a dynamic clock signal comprising an initial clock signal driving the single test vector injection and a delayed clock signal driving the capture of the test output vector.

There is further provided a fault detecting system comprising a computer device and the electronic circuit. The computer device is configured to extract a signature of the electronic circuit, including at least one comparative vector, at least one resulting value and/or a total number of differences. The computer device is also configured to apply a comparison operation consisting in comparing said signature to a pre-characterized signature of a genuine circuit, in order to determine if the electronic circuit comprises a fault related to at least one hardware defect and/or related to at least one firmware defect.

According to some embodiments, the comparison operation may be performed by the computer device using Euclidean distance algorithm, or machine learning based methods, such as the K-means clustering algorithm.

The computer device may be configured to determine a number of N scan paths to the electronic circuit and to generate at least one input vector of N bits, the scan paths being determined using a Design For Testability approach.

In some embodiments, the at least one input vector may form a pair of test vectors determined using a Launch-On-Shift approach or a Launch-Ln-Capture approach.

Embodiments of the invention provide a non-destructive and complete dynamic method and system for detecting fault in an electronic circuit using debug access ports, like the JTAG system. Such detected faults may be related to "intentional" faults like malicious hardware Trojans and "malware" Trojans insertion inside the electronic circuit. They may also be related to "natural" (or "non-intentional") faults like circuit or design issues (i.e. non-conformity) of the electronic circuit, for example. The debug access ports are leveraged opportunistically for this purpose, as they are also present in electronic circuits for the primary sake of correct fabrication.

Advantageously, the non-destructive method according to the embodiments of the disclosure may be applied to legacy systems which can be screened to detect possible faults, following an automatic test method allowing a very large coverage test.

Embodiments of the disclosure allow for the generation of non-functional signature of an electronic circuit behavior without being intrusive (i.e. without changing the electronic circuit for testing purpose, or with limited added material that do not interfere with the original circuit's functionality).

Advantageously, the method and system according to the embodiments of the disclosure enable a high precision characterization of an electronic circuit. It is based on characterization of functional behavior occurring during overclocking test sequence, as timing measurements are extremely accurate.

Embodiments of the disclosure allow forming a low-cost fault detection system as it may use pre-existing test tools, and it does not require extra time or expensive measurements equipment. The fault detection system according to the embodiments of the disclosure exploits the existing structure of the electronic circuit to reduce the intellectual property (IP) and unused materiel overhead.

Further advantages of the present invention will become clear to the skilled person upon examination of the drawings and detailed description. It is intended that any additional advantages be incorporated herein.

### BRIEF DESCRIPTION OF DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
[Fig.1] Figure 1 represents a fault detecting system, according to some embodiments.
[Fig.2] Figure 2 represents a combinational block of a target circuit of the fault detecting system, according to some embodiments.
[Fig.3] Figure 3 represents a target circuit of the fault detecting system, according to some embodiments.
[Fig.4] Figure 4 represents chronograms of clock signals, according to some embodiments.
[Fig.5] Figure 5 represents a measurement system of a fault detecting system, according to some embodiments.
[Fig.6] Figure 6 represents graphs of signature of target circuits, according to some embodiments.
[Fig.7] Figure 7 is a flowchart representing the phases of the fault detecting test method, according to certain embodiments.
[Fig.8] Figure 8 is a flowchart representing the preliminary phase and the initial phase implemented by the fault detecting system, according to certain embodiments.
[Fig.9] Figure 9 is a flowchart depicting the applicative phase implemented by the fault detecting system, according to certain embodiments.
[Fig.10] Figure 10 is a flowchart representing the report phase and the analysis phase implemented by the fault detecting system, according to certain embodiments.

Identical references are used in the figures to designate identical or similar elements. For clarity, items shown are not to scale.

### DETAILED DESCRIPTION

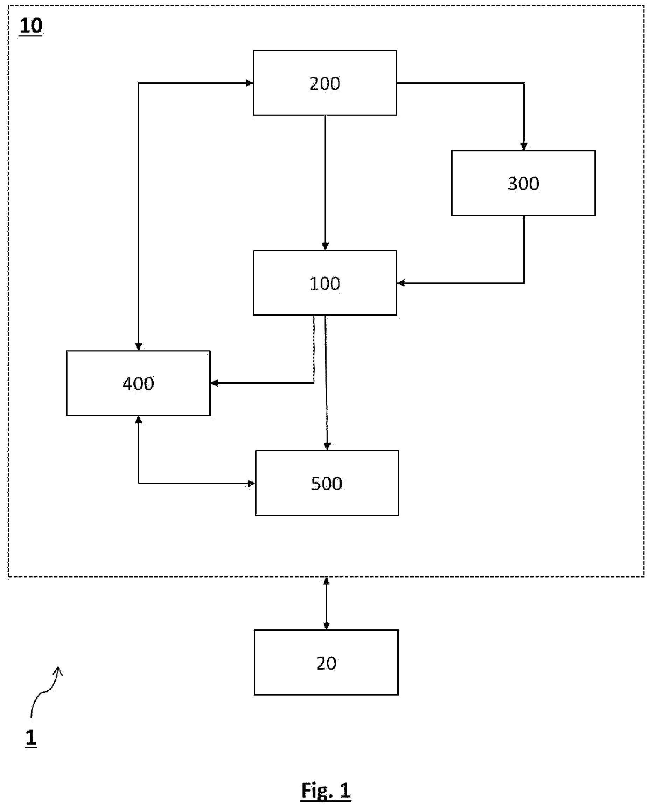

Figure 1 shows a fault detecting system 1 comprising an electronic circuit 10 and a computer device 20, according to the embodiments of the invention.

The fault detecting system 1 is configured to test the electronic circuit 10 (also referred to as a "device under test" or DUT), and the computer device 20. The computer device 20 may be for example and without limitation a personal computer (PC). The computer device 20 may be configured to control the electronic circuit 10 under test and to analyze the result of said test.

The fault detecting system 1 is configured to detect a fault related to the hardware configuration and/or the firmware structure of the electronic circuit 10 depending of the result analysis returned by the computer device 20.

The electronic circuit 10 may be an integrated circuit device (IC device), or a part thereof.

The integrated circuit device (IC device) may be for example and without limitation a system on a chip (SoC), a printed circuit board (PCB), an application-specific integrated circuit (ASIC), a field programmable gate array (FPGA), etc.

In exemplary applications of the invention, the electronic circuit 10 may be for example any embedded device or system manipulating and/or incorporating secret data and/or requiring a level of integrity, such as a smart card, a secure device, a multimedia player, a recorder, or a mobile storage device like memory cards and hard discs. Such IC device may be used in a wide range of communication and data processing applications such as in the automotive industry, in secure access solutions, in internet of things (IOT) connected objects, in mobile phone devices, in payment domains such as banking schemes, etc.

As shown in figure 1, the electronic circuit 10 comprises a target circuit 100, a CPU (Central Processing Unit) 200, a test application system 300, a memory system 400 and a measurement system 500.

The target circuit 100 is the core circuit of the electronic circuit 10 and may comprise a large number of functional elements such as electronic units and basic electronic components, including digital logic circuits and components (or flip-flops) that perform logical operations.

The CPU 200 of the electronic circuit 10 is configured to execute machine instructions of computer programs to control or command the functional elements of the electronic circuit 10, and in particular the target circuit 100.

Each element of the target circuit 100 comprises at least one debug access port. The debug access port may be for example JTAG port (or JTAG circuit, JTAG interface) as defined by IEEE 1149.1 standard (named after the *Joint Test Action Group* which codified it).

The fault detecting system 1 is adapted to implement one or more test characterizations of the electronic circuit 10 using said debug access ports associated with the elements of the target circuit 100.

According to some embodiments, the fault detecting system 1 may be adapted to implement the test characterizations of the electronic circuit 10 to detect a fault related to at least one hardware defect of the target circuit 100 and/or related to at least one firmware defect executed by the CPU 200 through the target circuit 100.

In some embodiments, a hardware defect of the target circuit 100 may be caused by a hardware Trojan (HT) which is a malicious modification of the circuitry of an original circuit, implemented either during the pre-silicon phase or during the post-silicon phase of the electronic circuit 10 manufacturing process. For example, a hardware defect may be caused by an additive HT representing the addition of an element such as a non-volatile memory, a subtractive HT representing a negative gate insertion triggering for example a functionality removal, or a change of wiring in a circuit programming.

A hardware defect of the target circuit 10 may be caused also by a firmware Trojan (also called "HT" in a firmware). A firmware Trojan can be for example, a modification of a non-volatile memory, such as a modification of « eFuse_bit » in the use of electronic fuses as represented below with the following lines of codes:

```
      if (eFuse_bit == 1)
           Allow access
     else
           Disable access
```

In some embodiments, a hardware defect of the target circuit 10 may be caused by a quality issue of the electronic circuit 10. For example, a quality issue may result from a dysfunction occurred during the electronic circuit 10 manufacturing process, like in a CMOS fabrication step. A quality issue may also result from a modification or from aging of elements in the target circuit 100 over time.

The computer device 20 in the fault detecting system 1 may be configured to acquire a netlist associated with from the electronic circuit 10, and in particular the netlist associated with the target circuit 100.

As used herein, a netlist (or 'chip netlist') refers to a description of the connectivity of a circuit. In its simplest form, a netlist may comprise a list of the electronic components in a circuit and a list of the nodes by which said electronic components are connected to.

The computer device 20 may be then configured to extract a number of N paths (also called "scan paths") forming a complete test plan for the target circuit 100. Each path may pass through a plurality of debug access ports of electronic components in the target circuit 100 forming a combinational block 110-n, "n" being the index corresponding to an n^{th} combinational block of the target circuit 100. The index "n" is therefore an integer between 1 and N, the value of N being an integer greater than or equal to 1. Each combinational block 110-n may comprise a path input 112-n and a path output 114-n, both being debug access ports of two different electronic components of said combinational block 110-n.

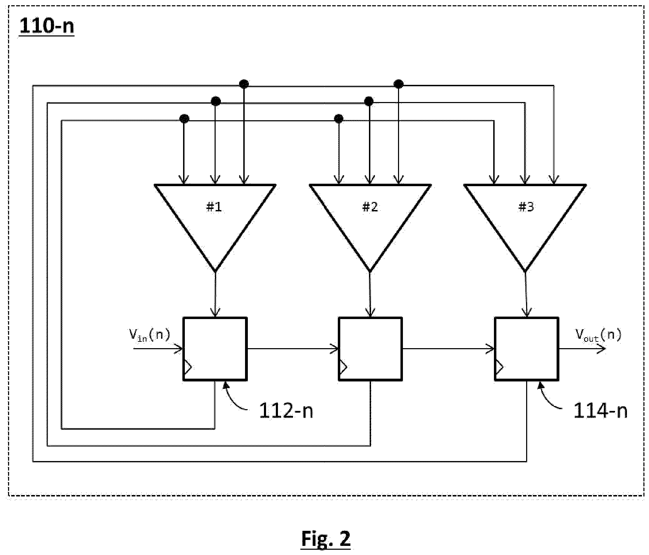

Figure 2 shows a simplified example of a combinational block 110-n comprising three logical components. In figure 2, each logical component (#1, #2, #3) comprises a debug access port, and the path input 112-n of the associated scan path may be the JTAG port of the logical component #1 while the path output 114-n may be the JTAG port of the logical component #3.

In some embodiments, the computer device 20 may apply a Design For Testability (DFT) approach using the debug access ports from each element considered in the target circuit 100 to generate the N paths.

In such embodiments, the computer device 20 may be configured to determine at least one input test vector Vᵢₙ. An input test vector (or 'test vector', or 'input vector') comprises a number of N bits, each bit corresponding to an input value of a path in a considered combinational block.

In some aspects, the computer device 20 may be configured to determine a single test vector Vᵢₙ₋₀, and the n^{th} bit of the single test vector Vᵢₙ₋₀ corresponding to the input value of the combinational block 110-n to be injected into the path input 112-n at a time t₀.

In some embodiments, the computer device 20 may be configured to determine a first test vector Vᵢₙ₋₁ and a second test vector Vᵢₙ₋₂. In this case, the n^{th} bits of the pair of test vectors noted (Vᵢₙ₋₁, Vᵢₙ₋₂) correspond to the input pair values of the combinational block 110-n to be injected into the path input 112-n at two distinct times, noted t₁ and t₂ respectively. Further, the first test vector Vᵢₙ₋₁ is an initialization vector to be applied to the overall path inputs (also referred as Dᵢₙ) at the first time t₁, that is adapted to stabilize the combinational blocks 110-n before sending the second test vector Vᵢₙ₋₂ (as the actual test vector) in the path inputs Dᵢₙ, at the second time t₂.

The computer device 20 may apply a Launch-On-Shift (LOS) approach or a Launch-On-Capture (LOC) approach to compute the pair of test vectors (Vᵢₙ₋₁, Vᵢₙ₋₂), the second test vector Vᵢₙ₋₂ being then defined as a function of the first test vector Vᵢₙ₋₁.

The computer device 20 may be configured to generate a characterization firmware adapted to command and/or control the application by the CPU 200 of the at least one test vector Vᵢₙ to the combinational blocks 110-n of the target circuit 100. The computer device 20 may be also configured to copy the characterization firmware into the CPU 200 of the electronic circuit 10, and to run the characterization firmware.

In response to the at least one test vector Vᵢₙ being applied to the target circuit 100, an output capture vector Vₒᵤₜ (or 'capture vector' or 'output vector') may be extracted from the overall path outputs (also referred as Dₒᵤₜ) of the combinational blocks 110-n, as shown in figure 2. The capture vector Vₒᵤₜ comprises a number of N bits, each bit corresponding to an output value of a path, so that the n^{th} bit of the capture vector Vₒᵤₜ corresponding to the output value sampled from the path output 114-n of the combinational block 110-n, at a time t₃, the value of t₃ being different from t₁ and t₂, and t₀.

As used herein, a 'test sequence' refers to a sequence of events relating to the execution of the electronic components from the target circuit 100, that is to say from the application of the at least one test vector Vᵢₙ to the path inputs 112-n of the combinational blocks 110-n, up to the capture the output values produced through the capture vector Vₒᵤₜ at the path outputs 114-n. A test sequence can also be characterized by an interval of time *δ*t (also referred to as time interval or launch-capture interval), which is the time between the injection event being the application of the test vector Vᵢₙ, or the second test vector Vᵢₙ₋₂, and the capture event being the sample of the capture vector Vₒᵤₜ. Therefore, a test sequence can be characterized as well by a "frequency" f, which can, roughly speaking, be defined as the inverse of the time interval *δ*t.

At nominal frequency fₙ (i.e. operational frequency), the time interval *δ*t is defined so that the target circuit 100 can run normally. Such test sequence running under nominal frequency fₙ may be referred as the nominal test sequence, which can be implemented through the characterization firmware as an initial test mode. A nominal test mode may comprise at least one nominal test sequence.

For any frequency f higher than the nominal frequency fₙ of the target circuit 100, the time interval *δ*t applied during a test sequence is reduced, so that the considered test sequence can be referred to as corresponding to an overclocking test sequence. An overclocking test mode may comprise one or a plurality of the same overclocking test sequences. Overclocking test modes may be programmed and implemented through the characterization firmware for a plurality of frequencies f, increasing them gradually under test of the electronic circuit 10.

As controlled by the CPU 200 through the characterization firmware running under test of the electronic circuit 10, the test application system 300 of the electronic circuit 10 may be configured to generate a clock signal CLK used to drive each test sequence of the target circuit 100.

According to some embodiments, a clock signal CLK may comprise at least one clock period corresponding to the operational clock period for the electronic circuit 10. The clock signal CLK may be a modified clock signal derived from an initial clock signal CLKᵢₙ produced by a clock generator.

In a first variant of the invention, the clock generator of the initial clock signal CLKᵢₙ an internal clock generator of the electronic circuit 10. For example, the test application system 300 may comprise the clock generator. Such embedded clock generator allows obtaining an optimized system 1, that is to say a system implementing a simplified fault detecting process in terms of cost, time and expertise.

In a second variant of the invention, the clock generator of the initial clock signal CLKᵢₙ may be an external clock generator of the electronic circuit 10. For example, an external clock generator may be a standalone device of the fault detecting system 1 (not shown on the figures). An external clock generator may also be comprised in the computer device 20.

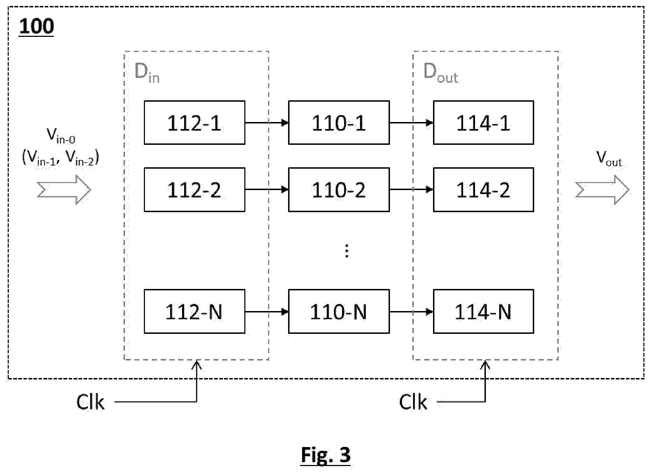

Figure 3 schematically illustrates the target circuit 100 represented by combinational blocks 110-n having path inputs Dᵢₙ adapted to receive at least one test vector Vᵢₙ (i.e. a single test vector Viₙ₋₀ or a pair of test vectors (Vᵢₙ₋₁, Vᵢₙ₋₂)), and path outputs Dₒᵤₜ adapted to release the capture vector Vₒᵤₜ, under the timing constraints of the clock signal CLK during a test sequence.

In some embodiments, the test application system 300 may comprise a delayed clock unit configured to generate a delayed clock signal CLKₒᵤₜ from the initial clock signal CLKᵢₙ. For each test sequence to perform, the test application system 300 is configured to produce a dynamic clock signal CLK_{d} used to drive the considered test sequence. The dynamic clock signal CLK_{d} is formed by the initial clock signal CLKᵢₙ and the delayed clock signal CLKₒᵤₜ.

To generate the dynamic clock signal CLK_{d}, the delayed clock unit may comprise a first input to the initial clock signal CLKᵢₙ, and a second input for a triggered signal. The delayed clock unit may comprise an output delivering the initial clock signal CLKᵢₙ or the delayed clock signal CLKₒᵤₜ depending on the triggered signal. For example, the delayed clock unit may comprise a delay component arranged to apply a delay to the initial clock signal CLKᵢₙ to generate the delayed clock signal CLKₒᵤₜ in response to the triggered signal.

Such dynamic clock signal CLK_{d} generated from the test application system 300 may be used to drive (or control) a test sequence by the CPU 200 using only a single test vector Vᵢₙ₋₀.

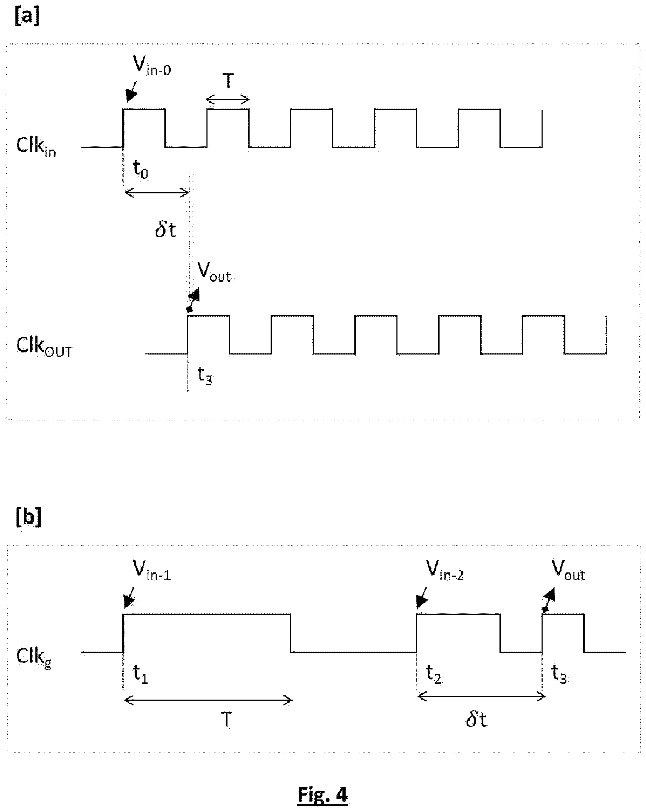

Figure 4 shows a chronogram 4(a) of the two distinct clock signals CLKᵢₙ and CLKₒᵤₜ that can be delivered though the delayed clock unit by the test application system 300, and applied on the target circuit 100 as the dynamic clock signal CLK_{d}. The initial clock signal CLKᵢₙ comprises clock periods from which the single test vector Vᵢₙ₋₀ is injected at a time t₀, in the path inputs Dᵢₙ. The time t₀ may correspond to one of a rising edge of the clock periods of the first clock signal CLKᵢₙ for example. The delayed clock signal CLKₒᵤₜ comprises clock periods from which the capture vector Vₒᵤₜ is sample at a time t₃, from the path outputs Dₒᵤₜ. The time t₃ may correspond to one of a rising edge of the clock periods of the second clock signal CLKₒᵤₜ for example.

As shown in the chronogram 4(a), the time interval *δ*t between the injection event related to the application of the single test vector Vᵢₙ₋₀ from the initial clock signals CLKᵢₙ and the capture event of the sample of the capture vector Vₒᵤₜ from the delayed clock signals CLKₒᵤₜ, corresponds to the difference (t₃ - t₀). The triggered signal to switch the output of the delayed clock unit from the initial clock signal CLKᵢₙ to the delayed clock signal CLKₒᵤₜ used by the test application system 300 may be applied or modified between the time t₀ and the time t₃. The time interval *δ*t may also correspond to the delay that may be applied by a delay component for instance. Such time interval *δ*t may be defined based on the duration T of the half of the operational clock period.

In some embodiments, for instance using the two clock signals CLKᵢₙ and CLKₒᵤₜ to produce a dynamic clock signal CLK_{d}, the time interval *δ*t may be equal to twice the duration T (i.e. *δ*t = 2 × T), so that the associated test sequence is performed as the nominal test sequence, as this value of time interval *δ*t refers to a nominal frequency fₙ.

In some aspects, the time interval *δ*t may take a value comprised strictly between the duration T and twice the duration T (i.e. T < *δ*t < 2 × T), the associated test sequence being performed as a overclocking test sequence, as this value of time interval *δ*t refers to a higher frequency f compared to the operational frequency fₙ of the target circuit 100.

In some embodiments, the test application system 300 may comprise a glitch generator configured to generate a single clock signal CLK_{g} (also called 'glitched clock signal'), for each test sequence to perform.

Figure 4 also shows a chronogram 4(b) representing a single clock signal CLK_{g} that can be generated by the test application system 300 and applied on the target circuit 100 to drive (or control) a test sequence using the injection of the pair of test vectors (Vᵢₙ₋₁, Vᵢₙ₋₂). The single clock signal CLK_{g} comprises a first clock period from which the first test vector Vᵢₙ₋₁ is injected at a time t₁, in the path inputs Dᵢₙ. The time t₁ may correspond for example to the rising edge of the first clock period of the single clock signal CLK_{g}. The single clock signal CLK_{g} comprises a second clock period, which is interspersed (or glitched) into two distinct on-parts, and during which the second test vector Vᵢₙ₋₂ is injected at a time t₂, in the path inputs Dᵢₙ, and the capture vector Vₒᵤₜ is captured at a time t₃, in the path outputs Dₒᵤₜ. For instance, the time t₂ (injection of the second test vector Vᵢₙ₋₂) may correspond to the rising edge of the first on-part of the second clock period, and the time t₃ (sample of the capture vector Vₒᵤₜ) may correspond to the rising edge of the second on-part of the second clock period of the single clock signal CLK_{g}.

For example, a clock glitch generator in the test application system 300 may use a phase locked loop (PLL) component to create a glitch delay in a clock period from an initial clock signal CLKᵢₙ produced by a clock generator. The clock glitch generator may then form a train of modified clock periods such as the single clock signal CLK_{g} shown in chronogram 4(b) of figure 4, as described for example in T. Bonny et al, "Clock Glitch Fault Injection Attack on an FPGA-based Non-autonomous Chaotic Oscillator", Nonlinear Dynamics, 2019, vol. 96(3).

As shown in the chronogram 4(b) of figure 4, the time interval *δ*t between the injection event related to the application of the second test vector Vᵢₙ₋₂ and the capture event of the sample of the capture vector Vₒᵤₜ, corresponds to the difference (t₃ - t₂), also corresponding to the glitch period applied for instance by a clock glitch generator. Such time interval *δ*t may be defined based on the duration T of the half of the operational clock period.

In some embodiments, for instance using a single clock signal, the time interval *δ*t may be equal to the duration T (i.e. *δ*t = T), so that the associated test sequence is performed as the nominal test sequence. Besides, the time interval *δ*t may take a value strictly inferior to the duration T (i.e. 0 < *δ*t < T). Such test sequence may be referred as an overclocking test sequence.

The characterization firmware generated by computer device 20 may comprise information related to the generation by the test application system 300 of the clock signal CLK used to drive each test sequence of the target circuit 100.

In particular, the characterization firmware may comprise information related to the application of an initial test mode corresponding to the nominal test mode to the target circuit 100. The characterization firmware may comprise as well information related to the application of a plurality of overclocking test modes to the target circuit 100. Each overclocking test mode corresponds to at least one test sequence to sample of the capture vector Vₒᵤₜ, under the clock signal CLK (a dynamic clock signal CLK_{d} comprising two clock signals CLKᵢₙ and CLKₒᵤₜ, or a single clock signal CLK_{g}) relative to a plurality of distinct 'running frequency' f respectively (i.e. higher frequency f compared to the operational frequency fₙ of the target circuit 100).

The characterization firmware generated by the computer device 20 and run by the CPU 200 is adapted to command or control the test application system 300 of the electronic circuit 10 so as to apply first the nominal test mode to the target circuit 100 and then apply the plurality of overclocking test modes at different running frequencies f, to the target circuit 100.

According to some embodiments, the characterization firmware is adapted to run for each test mode (nominal test mode at frequency fₙ, and/or overclocking test modes at several frequencies f), one test sequence or multiple test sequences under the same configurable parameters in order to eliminate noise.

For multiple test sequences applied in the electronic circuit 10 delivering multiple capture vectors Vₒᵤₜ for a test mode considered, the CPU 200 (through the characterization firmware) may be configured to determine a signal-to-noise ratio SNR from the multiple capture vectors Vₒᵤₜ delivered. Such signal-to-noise ratio SNR may be updated after each capture vector Vₒᵤₜ of the test mode is sampled. The CPU 200 may then be configured to compare each signal-to-noise ratio SNR determined with a referenced signal-to-noise ratio SNR_{ref}. The characterization firmware may also be adapted to run test sequences in a test mode until the signal-to-noise ratio SNR for the mode considered reaches the referenced signal-to-noise ratio SNR_{ref}.

For example, for a nominal test mode at nominal frequency fₙ, the characterization firmware may be adapted to run a single test sequence. As the running frequencies f increases, the associated test modes may use an increasing number of the test sequences to reach a signal-to-noise ratio SNR equal to the referenced signal-to-noise ratio SNR_{ref}.

In some aspects, the referenced signal-to-noise ratio SNR_{ref} may be a fixed values predefined by the characterization firmware for instance. Alternatively, the referenced signal-to-noise ratio SNR_{ref} may be a variable function of the frequencies f to apply.

Thus, the test application system 300 may be configured to dynamically modify the configurable parameters (i.e. the frequency f) of the clock signal CLK generated for different test sequences or between overclocking test modes application for example.

In some embodiments, the test application system 300 may comprise a debugging function controller managed by the CPU 200. Such debugging mode controller can be for example a JTAG controller which has the ability to toggle the target circuit 100 between a test mode and a regular mode.

As controlled by the CPU 200 through the characterization firmware running under test of the electronic circuit 10, the memory system 400 of the electronic circuit 10 may be configured to record the capture vector Vₒᵤₜ from the path outputs Dₒᵤₜ of the target circuit 10, under an initial test sequence at the operational frequency fₙ. The capture vector sampled at the nominal test mode may be named as the nominal capture vector noted Vₒᵤₜ₋ᵢ.

In one embodiment, the memory system 400 may comprise a random access memory (RAM) forming a local storage and a direct memory access (DMA) configured to transfer data from the CPU 200 to the random access memory.

As controlled by the CPU 200 through the characterization firmware running under test of the electronic circuit 10, the measurement system 500 of the electronic circuit 10 may be configured to perform a comparison operation between each capture vector Vₒᵤₜ obtained (or extracted) under an overclocking test mode and the nominal capture vector Vₒᵤₜ₋ᵢ.

For example, the capture vector Vₒᵤₜ used by the measurement system 500 to perform the comparison operation may be an average capture vector Vₒᵤₜ obtained from the multiple capture vectors Vₒᵤₜ delivered from the multiple test sequences of a test mode considered, when the associated signal-to-noise ratio SNR is equal to the referenced signal-to-noise ratio SNR_{ref}.

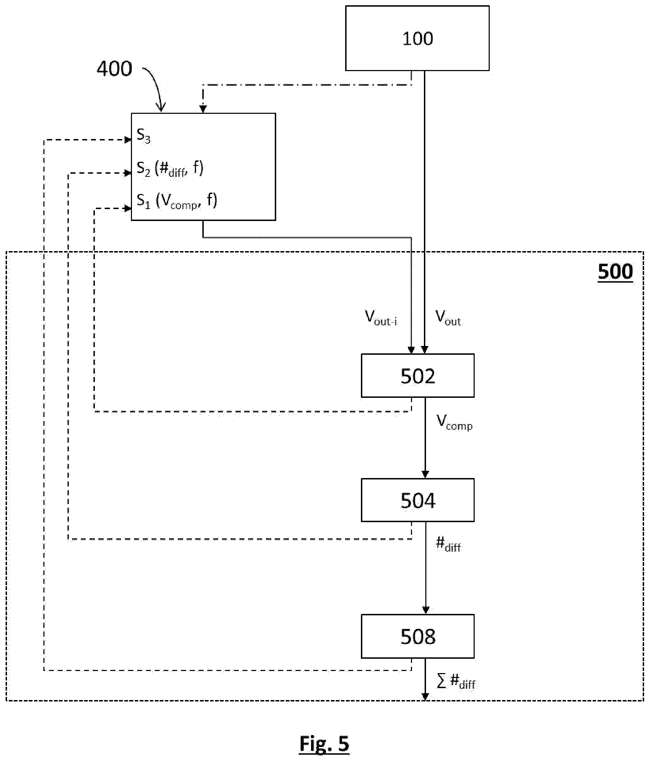

Figure 5 shows a measurement system 500 of the electronic circuit 10, according to the embodiments of the invention.

In some embodiments, the measurement system 500 may comprise a comparator unit 502 which may take as inputs the nominal capture vector Vₒᵤₜ₋ᵢ from the memory system 400, and a capture vector Vₒᵤₜ extracted from the target circuit 100. The comparator unit 502 may be configured to perform, for each test sequence, an operation (also called evaluation operation) between the two input vectors Vₒᵤₜ₋ᵢ and Vₒᵤₜ. Such evaluation operation between vectors may be a logical operation applied between each n^{th} bit from both vectors. For example, the comparator unit 502 may be a word-level XOR component.

For each test sequence performed by the electronic circuit 10, the comparator unit 502 may deliver as an output a comparative vector V_{comp} comprising a number of N bits. For example, an n^{th} bit of the comparative vector V_{comp} may be equal to a first evaluation value indicating the equality between the n^{th} bit of nominal capture vector Vₒᵤₜ₋ᵢ from the memory system 400, and the n^{th} bit of the capture vector Vₒᵤₜ extracted from the target circuit 100. This equality indicates that there is no difference between the result of a test sequence through a specific path in a combinational block 110-n, at a 'running frequency' f, compared to a test sequence through the same specific path, obtained at the nominal frequency fₙ. Alternatively, a n^{th} bit of the comparative vector V_{comp} may be equal to a second evaluation value indicating the inequality between the n^{th} bit of nominal capture vector Vₒᵤₜ₋ᵢ from the memory system 400, and the n^{th} bit of the capture vector Vₒᵤₜ extracted from the target circuit 100. This inequality indicates there is at least one difference between the result of a test sequence through a specific path in a combinational block 110-n, at a 'running frequency' f, compared to a test sequence through the same specific path and run at the nominal frequency fₙ.

For example, the first evaluation value may be equal to the value 0, and the second evaluation value may be equal to the value 1.

According to some embodiments, the evaluation value of a bit of the comparative vector V_{comp}, such as the first or the second evaluation value, may be assigned in response of the evaluation of multiple test sequences of a test mode through a specific path in a considered combinational block 110-n, to eliminated noise that can be statistically produced under a characterization with a unique test sequence for instance.

In some embodiments, the comparative vector V_{comp} obtained by the measurement system 500 may be an average comparative vector V_{comp} obtained from multiple comparative vectors V_{comp} generated from the multiple test sequences of a test mode considered, when a signal-to-noise ratio SNR associated to the multiple comparative vectors V_{comp} is equal to a referenced signal-to-noise ratio SNR_{ref}.

As controlled by the CPU 200 under test of the electronic circuit 10, the memory system 400 of the electronic circuit 10 may be configured to record each comparative vector V_{comp} delivered from the comparator unit 502 in the measurement system 500. The overall set of comparative vectors V_{comp} though all frequencies f (applied for each test mode) forms a comparative map S₁, which corresponds to a first form of signature (or 'fault detecting signature') of the target circuit 100 and which is an accurate and complete characterization of the target circuit 100 inner delays. For example, the comparative map S₁ may be saved in the memory system 400 as a matrix of binary values.

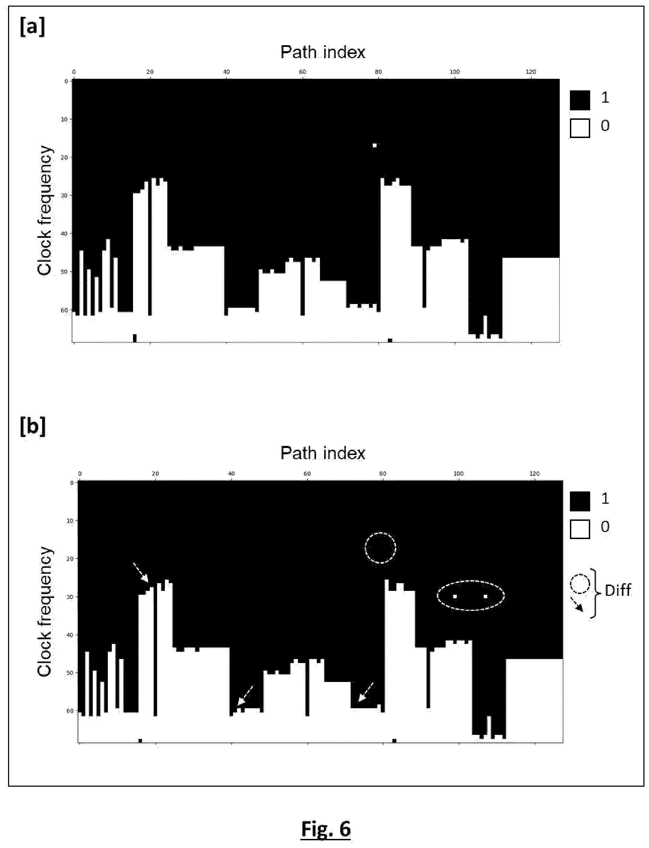

Figure 6 shows two distinct examples of representation as graph of a first signature S₁ of target circuits 100 after a complete test characterization.

It should be noted that, in the graphs 6(a) and 6(b), the matrix starts on the first line with a line completely equal to 0. Indeed, the corresponding comparative vector V_{comp} is the difference between the nominal capture vector Vₒᵤₜ₋ᵢ at the nominal frequency fₙ (i.e. the reference) and itself. As the running frequency f increases (the time interval *δ*t decreases), the number of values equal to 1 increase in the resulting comparative vector V_{comp}, meaning that the corresponding paths are being more and more violated with increasingly narrow overclocking.

Graph 6(a) of figure 6 illustrates a comparative map of a "genuine" target circuit obtained after completing a test characterization, presenting a reference signature S_{1-ref}. On the contrary, graph 6(b) of figure 6 illustrates the comparative map S₁ of another target circuit 100 obtained after completing a test characterization, presenting differences with the reference signature S_{1-ref}. The difference of certain values obtained for overclocking test modes in the comparative map S₁ compared to a reference signature S_{1-ref}, highlight the presence of hardware defects ("Diff" on Graph 6(a)), this other target circuit 100 being an "infected" or a "defective" target circuit 100.

In some embodiments, the measurement system 500 may comprise a counter unit 504 which may take as input the comparative vector V_{comp} from the comparator unit 502, for each test sequence (or test mode), and be configured to evaluate (or to count, to sum) the number of set bits of the comparative vector V_{comp}. Thus, for each test sequence, the counter unit 504 may deliver as an output a resulting value #_{diff} corresponding to the sum of each evaluation value of all bits. This sum can be view as the sum of changes between the test sequences through all the paths in the combinational blocks 110-n of the target circuit 100, at a 'running frequency' f, compared to the nominal test sequences run at the nominal frequency fₙ.

As controlled by the CPU 200 under test of the electronic circuit 10, the memory system 400 of the electronic circuit 10 may be configured to record each resulting value #_{diff} delivered from the counter unit 504 in the measurement system 500. The comparative record vector S₂, equivalent to the overall set of resulting value #_{diff} though all frequencies f applied for each test mode. Such comparative record vector S₂ may correspond to a second signature of the target circuit 100.

In some embodiments, the resulting value #_{diff} obtained through the measurement system 500 may be an average resulting value #_{diff} obtained from multiple resulting values #_{diff} generated from the multiple test sequences of a test mode considered, when a signal-to-noise ratio SNR associated to the multiple resulting values #_{diff} is equal to a referenced signal-to-noise ratio SNR_{ref}.

In some embodiments, the measurement system 500 may comprise an additional counter unit 506 configured to evaluate the total number of changes S₃ for the overall running test, through all the 'running frequencies' f. The memory system 400 of the electronic circuit 10 may be configured to record this total number of differences (or changes) S₃ which corresponds to a third signature of the target circuit 100.

In some embodiments, the measurement system 500 may be configured to deliver a specific signature of the target circuit 100.

The functions of the counter units 504 and 506 may be performed using hardware computations. Such evaluation performed by counter units 504 and 506 allow generating very characteristic signatures easily computable (inexpensive in terms of I/O) and easily exportable out of electronic circuit 10 by the computer device 20.

In some embodiments, the computer device 20 may be configured to verify the authenticity of a signature. For example, the computer device 20 may be configured to obtain at least one signature of the target circuit 100, to analyze it and to determine if the target circuit 100 is "genuine" or not (i.e. "infected", "faulty" or "defective" by the presence of hardware defects). For example, the computer device 20 may be configured to apply a comparison operation between the signature obtained of the target circuit 100 and a stored signature of an actual "genuine" circuit pre-characterized to compare the two signatures. This comparison operation may be performed using various methods, such as Euclidean distance algorithm, or machine learning based methods, such as the K-means clustering algorithm. The advantage of using clustering algorithms is that such algorithms yield a probability of misclassification, allowing determining a quantitative measure of a hardware Trojan presence for example.

It should be noted that the electronic circuit 10 may be considered as a built-in test system comprising initial electronic parts (i.e. the target circuit 100, the CPU 200 and the memory system 400 for instance), as well as supportive hardware parts (i.e. the test application system 300 and the measurement system 500) for a full delay characterization.

Such built-in test system, and in particular with the functionalities of the memory system 400 (like the integrated RAM unit) allow the fault detecting system 1 to perform a fault detecting test method with a very low measurement time and high precision.

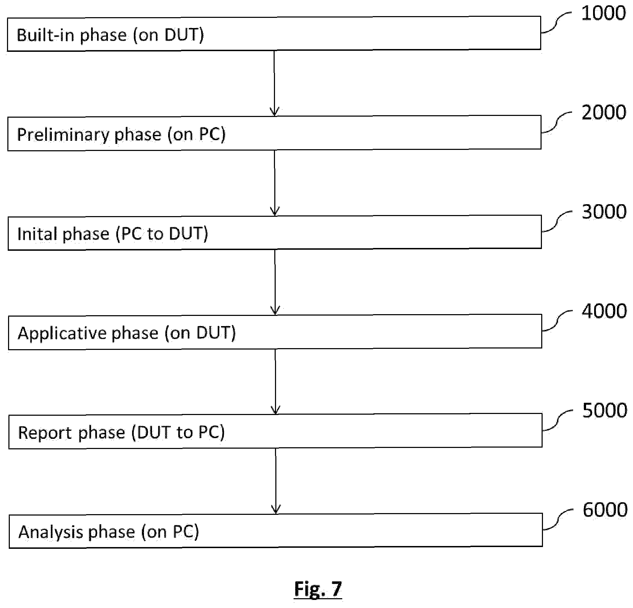

Figure 7 is a flowchart depicting phases of the fault detecting test method (implemented by the fault detecting system 1), according to certain embodiments.

In a built-in phase 1000, supportive hardware parts may be inserted into the electronic circuit 10.

In a preliminary phase 2000, preliminary steps (as regular backend flow) may be performed on the computer device 20 to formulate the fault detecting test and generated a characterization firmware, which may be copied and launched into the CPU 200 of the electronic circuit 10 from the computer device 20 in the initial phase 3000 (or setup phase).

In an applicative phase 4000, the characterization firmware runs by the CPU 200 to perform the automatic test of the electronic circuit 10, automatic measurement and acquisition from the memory system 400 and the measurement system 500 under test. The results of such test are transferred from the electronic circuit 10 to the computer device 20 in the report phase 5000.

In an analysis phase 6000, the computer device 20 evaluates the results of the test on the electronic circuit 10 and resolves if a fault related to the hardware configuration and/or the firmware structure of the electronic circuit 10 is detected.

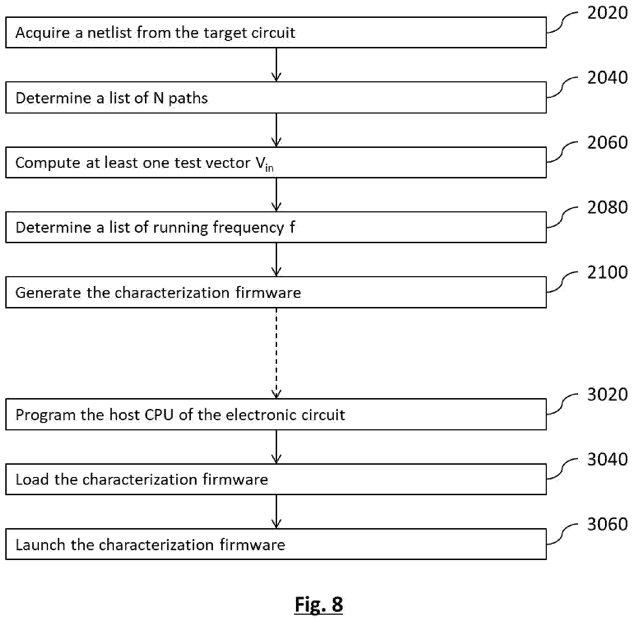

Figure 8 is a flowchart depicting the preliminary phase 2000 and the initial phase 3000 implemented by the computer device 20 of the fault detecting system 1, according to certain embodiments.

At step 2020, the netlist of the target circuit 100 may be acquired by the computer device 20.

At step 2040, a list of N scan paths in combinational blocks of the target circuit 100 may be generated by the computer device 20.

In some embodiments, at this step 2040 the computer device 20 may apply a DFT approach (or strategy) using the debug access ports of the target circuit 100. And in some aspects, a DFT approach may be used to avoid scanning sensitive resources of the target circuit 100. Such DFT approach may be intended in the case where the electronic circuit 10 needs to be protected against unauthorized dumps. However, such DFT strategy is not impeding the fault detecting test method, as the aim of the scan paths generation is to characterize the logic depth of the target circuit 100 and not to readout keys of the target circuit 100.

At step 2060, at least one test vector Vᵢₙ may be computed by the computer device 20.

At step 2080, a gradient of running frequencies f to characterize the target circuit 100 may be determined by the computer device 20.

At step 2100, the characterization firmware may be completed by the computer device 20.

At step 3020, the host CPU 200 of the electronic circuit 10 may be program for the test process (i.e. applicative phase 4000 mainly).

At step 3040, the characterization firmware may be loaded by the computer device 20 onto the CPU 200 of the electronic circuit 10.

At step 3060, the characterization firmware may be trigged by the computer device 20 to launch the test process on the electronic circuit 10.

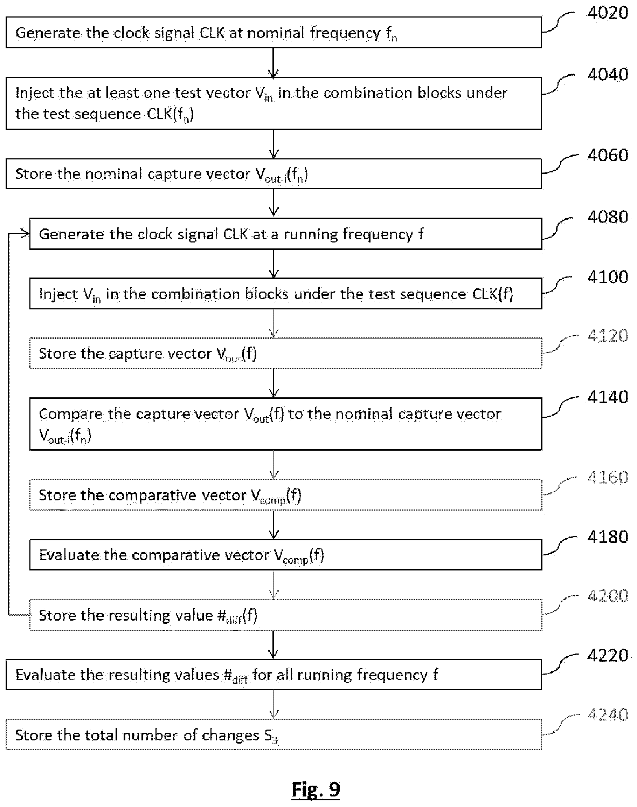

Figure 9 is a flowchart depicting steps from the applicative phase 4000 applied by the electronic circuit 10 of the fault detecting system 1, according to certain embodiments.

At step 4020, a clock signal CLK at nominal frequency fₙ is generated by the test application system 300 of the electronic circuit 10.

At step 4040, the at least one test vector Vᵢₙ is injected in the combination blocks 110-n of the target circuit 100 under a nominal test sequence noted CLK(fₙ).

At step 4060, the nominal capture vector Vₒᵤₜ₋ᵢ(fₙ) sampled from the combination blocks 110-n of the target circuit 100 is stored in the memory system 400 of the electronic circuit 10.

A series of steps (for instance step 4080 to step 4200) are then repeated for the gradient of running frequencies f to characterize the target circuit 100.

At step 4080, a clock signal CLK at a running frequency f is generated by the test application system 300 of the electronic circuit 10.

At step 4100, the at least one test vector Vᵢₙ is injected in the combination blocks 110-n of the target circuit 100 under the overclocking test sequence noted CLK(f).

At step 4120, the capture vector Vₒᵤₜ(f) sampled from the combination blocks 110-n of the target circuit 100 at the running frequency f may be stored in the memory system 400 of the electronic circuit 10.

At step 4140, the capture vector Vₒᵤₜ(f) is compared to the nominal capture vector Vₒᵤₜ₋ᵢ(fₙ) to generate the comparative vector V_{comp}(f) of the combination blocks 110-n of the target circuit 100 at the running frequency f.

At step 4160, the comparative vector V_{comp}(f) may be stored in the memory system 400 of the electronic circuit 10.

At step 4180, the comparative vector V_{comp}(f) may be computed to generate a resulting value #_{diff}(f) relative to the overall combination blocks 110-n of the target circuit 100 tested at the running frequency f.

At step 4200, the resulting value #_{diff}(f) may be stored in the memory system 400 of the electronic circuit 10.

At step 4220, the complete resulting values #_{diff} may be computed to generate the total number of changes S₃ relative to the overall combination blocks 110-n of the target circuit 100 tested for all running frequencies f.

At step 4240, the total number of changes S₃ may be stored in the memory system 400 of the electronic circuit 10.

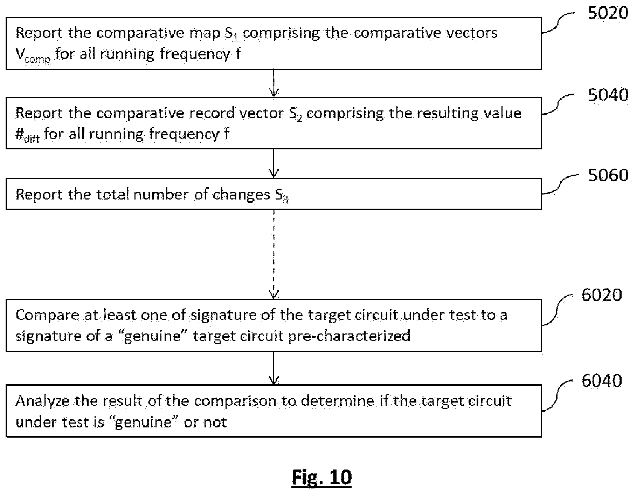

Figure 10 is a flowchart depicting the report phase 5000 and the analysis phase 6000 implemented by the computer device 20 of the fault detecting system 1, according to certain embodiments.

At step 5020, the comparative map S₁ comprising the comparative vectors V_{comp} for at least one or all running frequencies f may be sent from the memory system 400 of the electronic circuit 10 to the computer device 20.

At step 5040, the comparative record vector S₂ comprising the resulting value #_{diff} for at least one or all running frequencies f may be also sent from the memory system 400 of the electronic circuit 10 to the computer device 20.

At step 5060, the total numbers of changes S₃ may be also sent from the memory system 400 of the electronic circuit 10 to the computer device 20.

It should be noted that, the applicative phase 4000 and the report phase 5000 may overlap, through direct reporting steps during the test process on the electronic circuit 10. For example, at step 4120bis during a test sequence run at a frequency f, the capture vector Vₒᵤₜ(f) may be reported directly from the measurement system 400 of the electronic circuit 10 to the computer device 20.

Similarly, at step 4160bis and 4200bis during a test sequence run at a frequency f, the comparative vector V_{comp}(f) and/or the resulting value #_{diff}(f) may be reported directly from the measurement system 400 of the electronic circuit 10 to the computer device 20.

At step 4200bis, the total number of changes S₃ may also be reported directly from the measurement system 400 of the electronic circuit 10 to the computer device 20.

In the analysis phase 6000, at step 6020, at least one of signature of the target circuit under test may be compared to a signature of a "genuine" target circuit pre-characterized in the computer device 20.

At step 6040, the result of the comparison of the signatures may be analyzed to determine if the target circuit 100 of the electronic circuit 10 is "infected" (or "compromised") or "defective".

A person skilled will easily understand that certain steps or sub-steps of the complete fault detecting process can be carried out simultaneously, sequentially, successively, independently or not, and/or in a different order, for example in a defined order by the computer device 20 and/or the configuration of the electronic circuit 10 in the fault detecting system 1.

The invention may be implemented in any fault detecting system comprising an electronic circuit (i.e. device, system, or embedded system) incorporating secret data and potentially exposed to hardware Trojan injection, such as a smart card, a smart phone, a smart meter, a secure device, an embedded secure device, a multimedia player, a recorder, or a mobile storage device like memory cards and hard discs, the access to the any device, system or embedded system being monitored by the cryptosystem.

Embodiments of the present invention can take the form of an embodiment containing software only, hardware only or both hardware and software elements. In particular the processing units may be implemented as processors or in general purpose machines (e.g., hardwired look-up tables or "digital signal processors" embedded into Field Programmable Gates Array (FPGAs))

In general, the routines executed to implement the embodiments of the invention, implemented as part of an operating system and/or a specific application, component, program, object, module or sequence of instructions, or even a subset thereof, may be referred to herein as "computer program code", or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flowcharts, sequence diagrams, and/or block diagrams may be reordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

While all of the disclosure has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described.

## Claims

1. An electronic circuit (10) comprising a target circuit (100), a CPU (200) and a memory system (400), said target circuit (100) comprising a plurality of debug access ports and including a number of N scan paths, each path passing through at least a part of said debug access ports, wherein said CPU (200) is configured to apply at least one input vector (Vᵢₙ) of N bits to said target circuit (100) under a nominal test sequence, each bit of said at least one input vector (Vᵢₙ) corresponding to an input value of one of said paths, and wherein, in response to the application of the at least one input vector (Vᵢₙ), said memory system (400) is configured to store a nominal output vector (Vₒᵤₜ₋ᵢ) of N bits from said target circuit (100), each bit of the nominal output vector (Vₒᵤₜ₋ᵢ) corresponding to an output value of one of said paths,
wherein said electronic circuit (10) further comprises a test application system (300) and a measurement system (500), said test application system (300) being configured to generate a clock signal (CLK) to implement an overclocking test sequence, said CPU (200) being configured to apply the at least one input vector (Vᵢₙ) to said target circuit (100) under said overclocking test sequence, said measurement system (500) being configured to perform a comparison operation between said stored nominal output vector (Vₒᵤₜ₋ᵢ) and a test output vector (Vₒᵤₜ) obtained in response to said overclocking test sequence, and to deliver at least one comparative vector (V_{comp}) being a signature of the electronic circuit (10) for detecting fault related to at least one hardware defect of the target circuit (100) and/or related to at least one firmware defect executed by the CPU (200) through the target circuit (100).

2. The electronic circuit (10) of claim 1, wherein said debug access ports are JTAG ports, and wherein said test application system (300) comprises a JTAG controller.

3. The electronic circuit (10) of one of claims 1 or 2, wherein said memory system (400) is configured to store said at least one comparative vector (V_{comp}) from said measurement system (500).

4. The electronic circuit (10) of one of the claims 1 to 3, wherein said at least one comparative vector (V_{comp}) comprises N bits, and wherein said measurement system (500) is configured to count said bits of said at least one comparative vector (V_{comp}) to deliver at least one resulting value (#_{diff}) being a signature of the electronic circuit (10) for detecting fault related to at least one hardware defect of the target circuit (100) and/or related to at least one firmware defect executed by the CPU (200) through the target circuit (100).

5. The electronic circuit (10) of claim 4, wherein said memory system (400) is configured to store said at least one resulting value (#_{diff}) from said measurement system (500).

6. The electronic circuit (10) of one of the claims 4 or 5, wherein said measurement system (500) is configured to count values of said at least one resulting value (#_{diff}) to deliver a total number of differences (S₃) forming a signature of the electronic circuit (10) for detecting fault related to at least one hardware defect of the target circuit (100) and/or related to at least one firmware defect executed by the CPU (200) through the target circuit (100).

7. The electronic circuit (10) of one of the claims 1 to 6, wherein said test application system (300) comprises a glitch generator using a phase locked loop component (PLL) to create a glitch delay in an initial clock signal (CLKᵢₙ), said clock signal (CLK) generated being a glitched clock signal (CLK_{g}).

8. The electronic circuit (10) of claim 7, wherein said at least one input vector (Vᵢₙ) is a pair of test vectors (Vᵢₙ₋₁, Vᵢₙ₋₂), and wherein said glitched clock signal (CLK_{g}) comprises a first clock period driving the injection of the first test vector (Vᵢₙ₋₁) of said pair, and a second glitched clock period driving the injection of the second test vector (Vᵢₙ₋₂) of said pair, and also the capture of the test output vector (Vₒᵤₜ).

9. The electronic circuit (10) of one of the claims 1 to 6, wherein said at least one input vector (Vᵢₙ) is a single test vector (Vᵢₙ₋₀), and wherein said test application system (300) comprises a delayed clock unit, said clock signal (CLK) generated being a dynamic clock signal (CLK_{d}) comprising an initial clock signal (CLK) driving the single test vector (Vᵢₙ₋₀) injection and a delayed clock signal (CLKₒᵤₜ) driving the capture of the test output vector (Vₒᵤₜ).

10. A fault detecting system (1) comprising a computer device (20) and the electronic circuit (10) according to one of the claims 1 to 9, wherein said computer device (20) being configured to extract a signature of said electronic circuit (10), including at least one comparative vector (V_{comp}), at least one resulting value (#_{diff}) and/or a total number of differences (S₃), said computer device (20) being also configured to apply a comparison operation consisting in comparing said signature to a pre-characterized signature of a genuine circuit, in order to determine if said electronic circuit (10) comprise a fault related to at least one hardware defect and/or related to at least one firmware defect.

11. A fault detecting system (1) of claim 10, wherein said comparison operation is performed by said computer device (20) using Euclidean distance algorithm, or machine learning based methods, such as the K-means clustering algorithm.

12. A fault detecting system (1) of one of the claims 10 or 11, wherein said computer device (20) is configured to determine a number of N scan paths to said electronic circuit (10) and to generate at least one input vector (Vᵢₙ) of N bits, said scan paths being determined using a Design For Testability (DFT) approach.

13. The fault detecting system (10) of one of the claims 10 to 12, wherein said at least one input vector (Vᵢₙ) forms a pair of test vectors (Vᵢₙ₋₁, Vᵢₙ₋₂) determined using a Launch-On-Shift (LOS) approach or a Launch-Ln-Capture (LOC) approach.
